# EUROPÄISCHE PATENTANMELDUNG

(11) **EP 1 865 293 A1**
(43) Veröffentlichungstag der Anmeldung: **12.12.2007**
(21) Anmeldenummer: 07109620.0
(22) Anmeldetag: 05.06.2007
(51) Int. Cl.: G01D 11/24, G08C 17/02, G01D 9/00

(54) **System zur Erfassung von Messwerten an Fahrzeugen**

(30) Priorität: 09.06.2006 AT 4542006 U
(71) Anmelder: DiTest Fahrzeugdiagnose GmbH, 8020 Graz (AT)
(72) Erfinder: Gutkauf, Bernd, 8053, Graz (AT)
(74) Vertreter: Laminger, Norbert

(57) **Zusammenfassung**

Ein System zur Erfassung von Messwerten an Fahrzeugen umfasst zumindest ein kompaktes Sensormodul und eine Einheit zum Darstellen und/oder Auswerten der Messdaten des Sensormoduls.

Damit mit einfachen, nach Bedarf anbringbaren Sensormodulen die für die Diagnose notwendigen Daten im normalen Betrieb des Fahrzeuges und allenfalls über längere Betriebszeiten ermittelt werden und anschließend für die Diagnose zur Verfügung gestellt werden können, ist das Sensormodul mit einer Einrichtung (13) zur drahtlosen Datenübertragung, einem Datenspeicher und einem Mikrocontroller (14) ausgestattet.

## Beschreibung

Die Erfindung betrifft ein System zur Erfassung von Messwerten an Fahrzeugen, umfassend zumindest ein kompaktes Sensormodul und eine Einheit zum Darstellen und/oder Auswerten der Messdaten des Sensormoduls, allenfalls mit einer Einrichtung zur drahtlosen Datenübertragung.

Derartige Systeme sind in vielerlei Ausführungen zur Diagnose bei Fahrzeugen bekannt. So ist beispielsweise in der EP 309 346 A1 ein Überwachungssystem beschrieben, bei welchem bestimmte, vorgegebene Parameter des Fahrzeuges überwacht und die Messdaten zentral im Fahrzeug erfasst werden. Von dort können sie über Funk an einen Datenspeicher oder über Kabel an eine tragbare Auslese-, Speicher- und Auswerteinheit übertragen werden. Auch für Schienenfahrzeuge sind, etwa aus der DE 20200401261 U1, Systeme bekannt, bei welchen Sensoren am Fahrzeug gesteuert über entsprechende Controller Daten ermitteln und allenfalls zwischenspeichern. Über Funk können diese Daten dann an eine Auswerteeinheit übertragen und dort weiterverarbeitet werden.

Zur Ermittlung von Servicearbeiten am Fahrzeug werden gemäß der US 6 677 854 B1 Sensordaten aus dem Fahrzeug mittels drahtloser Datenübertragung an einen externen Computer übermittelt, der daraus Servicezeitpunkt, -ort und die Art der Servicearbeiten ermittelt. Aktive, semiaktive oder semipassive Sensoren werden gemäß der EP 1 405 044 A1 drahtlos mit einer Abfrageeinheit verbunden und dann weiter durch einen Prozessor verarbeitet, um einen Fahrzeugzustand zu diagnostizieren. Durch den Prozessor können unmittelbar Aktionen am Fahrzeug ausgelöst werden, oder es können die verarbeiteten Daten zur externen Weiterverarbeitung übermittelt werden.

Alle diese Systeme nutzen fix am Fahrzeug vorgesehen Sensoren, die noch dazu oftmals sehr speziell ausgestaltet und damit aufwendig und teuer sind. Meist werden auch im Fahrzeug befindliche Speicher- und Verarbeitungseinrichtungen für die Sensordaten benötigt bzw. fix eingebaut, wodurch die Systeme noch komplizierter und aufwendiger werden.

Bei System der EP 754 940 A2 werden Messmodule an das Fahrzeug angeschlossen und führen entsprechend Steuerbefehlen eines externen Hauptsteuermoduls mit Benutzerschnittstelle Messaufgaben aus und übertragen die Messdaten sofort an das Hauptsteuermodul. Diese Messaufgaben werden gemäß Informationen aus einer ebenfalls durch das Hauptsteuermodul zugänglichen externen Datenbank ausgewählt. Die Messdaten können dann im Hauptsteuermodul durch Diagnoseprogramme ausgewertet werden. Dieses System ist für den stationären und kurzzeitigen Betrieb ausgelegt, in welchem manche zu diagnostizierenden Fehler allenfalls gar nicht auftreten.

Die Aufgabe der vorliegenden Erfindung war daher ein System, bei welchem mit einfachen, nach Bedarf anbringbaren Sensormodulen die für die Diagnose notwendigen Daten im normalen Betrieb des Fahrzeuges und allenfalls über längere Betriebszeiten ermittelt werden und anschließend für die Diagnose zur Verfügung gestellt werden können.

Zur Lösung dieser Aufgabe ist erfindungsgemäß vorgesehen, daß das Sensormodul mit einer Einrichtung zur drahtlosen Datenübertragung, einem Datenspeicher und einem Mikrocontroller ausgestattet ist. Damit können im normalen Betrieb des Fahrzeuges beliebige, durch die Art und Ausstattung des Sensormoduls vorgebbare Daten ermittelt und aufgezeichnet werden, ohne daß aufwendige und teure Zusatzgeräte für die Messsteuerung vorhanden sein müssen. Vorteilhafterweise werden auf beiden Seiten vorhandene Einrichtungen zur drahtlosen Datenübertragung nach dem selben Protokoll betrieben, so daß die Übertragung der Sensordaten vom Sensormodul auf die Einheit zum Darstellen und/oder Auswerten dieser Daten drahtlos erfolgen kann, beispielsweise über Bluetooth oder auch andere Funkverbindungsprotokolle, die für den Werkstattbetrieb mit seinen vielen Störeinflüssen noch besser geeignet sind.

Gemäß einer ersten vorteilhaften Ausführungsform kann vorgesehen sein, daß das Sensormodul mit einem integriertem Energiespeicher für autarken Betrieb ausgestattet und zum Aufladen dieses Energiespeichers an eine allenfalls mobile Basisstation ankoppelbar ist. Damit ist ein Betrieb der Sensormodule unabhängig von externer Energieversorgung, insbesonders von der Energieversorgung des Fahrzeuges möglich.

Wenn hingegen das Sensormodul mit Einrichtungen zur Ankopplung an die Energieversorgung des Fahrzeuges versehen ist, kann die Betriebsdauer des Sensormoduls bedeutend erhöht werden und bei intakter Energieversorgung des Fahrzeuges beliebig lang aufrecht erhalten werden.

Um eine noch größere Flexibilität zu erreichen, kann das Sensormodul aus zwei trennbaren Modulen bestehen, wobei eines der Module den Energiespeicher und/oder die Einrichtungen zur Ankopplung an die Energieversorgung des Fahrzeuges, die Einrichtung zur drahtlosen Datenübertragung und den Datenspeicher enthält, und wobei das zweite Modul zumindest einen Sensor und/oder eine Sensoranschlussbuchse für eine Messgröße aufweist, wobei die beiden Module über Steckkontakte verbindbar sind.

Gemäß einer vorteilhaften erfindungsgemäßen Ausführungsform ist das System dadurch gekennzeichnet, daß die Basisstation mit der Einheit zum Darstellen und/oder Auswerten der Messdaten des Sensormoduls verbindbar und mit einer Einrichtung zur drahtlosen Datenübertragung zum Sensormodul ausgestattet ist. Damit können auch einfacher aufgebaute Einheiten zum Darstellen und/oder Auswerten der Messdaten, das sind vorzugsweise PCs oder Laptops, die nicht in jedem Fall für die drahtlose Datenübertragung ausgestattet sind, zum Einsatz kommen.

Für bereits entsprechend ausgestattete Geräte, beispielsweise mit Bluetooth oder anderen Technologien/Protokollen für zuverlässige Datenübertragung bei Störeinflüssen, wie sie in Werkstätten, Diagnoseplätzen, usw. vorkommen, kann natürlich auch vorgesehen sein, daß die Einheit zum Darstellen und/oder Auswerten der Messdaten des Sensormoduls und die Basisstation über Einrichtungen zur drahtlosen Datenübertragung miteinander verbindbar sind.

Um sehr einfache, wirtschaftlich und robust aufgebaute Standard-Sensormodule verwenden zu können, ist gemäß einem weiteren Erfindungsmerkmal vorgesehen, daß in der Einheit zum Darstellen und/oder Auswerten der Messdaten des Sensormoduls eine Parametriersoftware implementiert ist und jedes Sensormodul durch die Parametriersoftware, allenfalls via der Basisstation, ansprechbar und parametrierbar ist. Damit können einfache und billige Standard-Module verwendet und je nach gewünschter Messaufgabe parametriert und damit an den Messzweck adaptiert werden.

Um komplexere Messaufgaben zu ermöglichen, bei welcher verschiedene Parameter am Fahrzeug abgestimmt aufeinander erfasst werden sollen, ist vorteilhafterweise vorgesehen, daß in der Einheit zum Darstellen und/oder Auswerten der Messdaten des Sensormoduls eine Synchronisierungssoftware für mehrere Sensormodule implementiert ist und alle allenfalls via der Basisstation angeschlossene Sensormodule durch die Synchronisierungssoftware ansprechbar und miteinander synchronisierbar sind.

Allenfalls kann in der Einheit zum Darstellen und/oder Auswerten der Messdaten des Sensormoduls eine Software zur Weiterverarbeitung der von den Sensormodulen ausgelesenen Messwerte implementiert sein, so daß die unmittelbare Auswertung und Diagnose des Fahrzeugzustandes vor Ort möglich ist.

Um die Messdaten auf für den jeweiligen Diagnosezweck relevante Daten zu beschränken und damit auch das zu speichernde und zu verarbeitende Datenvolumen zu begrenzen, ist eine Ausführungsform der Erfindung vorteilhaft, bei welcher das Sensormodul eine Triggereinrichtung zum Starten bzw. Stoppen der Messwerterfassung oder Setzen von Markern in den Messdaten aufweist. Damit ist es auch möglich, den Beginn und auch des Ende einer Messung abhängig von den Messergebnissen anderer Sensormodule oder externer Einrichtungen zu ermöglichen.

Dabei kann die Triggereinrichtung über ein externes manuelles Betätigungselement ansteuerbar sein, wenn der Benutzer des Fahrzeuges die Messung entsprechend den von ihm als notwendig erachteten Symptomen initiieren will.

Um den Aufwand für Verkabelung gering zu halten, kann dabei vorgesehen sein, daß das manuelle Betätigungselement und die Triggereinrichtung mit Einrichtungen zur drahtlosen Datenübertragung ausgestattet sind.

Vorteilhafterweise kann für einfache, ohne komplizierte Berechnungen durchführbare Diagnosen eine Ausführung der Sensormodule vorgesehen sein, bei welcher das Sensormodul eine mit seinem Speicher für die Messwerte verbundene optische und/oder akustische Signalausgabeeinrichtung aufweist.

In der nachfolgenden Beschreibung soll die Erfindung anhand der beigefügten Zeichnungen eines vorteilhaften Ausführungsbeispiels näher erläutert werden. Dabei zeigt die Fig. 1a eine Seitenansicht eines Messkopfes für ein erfindungsgemäßes Sensormodul, Fig. 1b zeigt den Messkopf in perspektivischer Ansicht, Fig. 1c ist eine Draufsicht auf den Messkopf der Fig. 1a und 1b, die Fig. 2a ist ein Schnitt durch ein Speicher- und Funk-Modul für ein erfindungsgemäßes Sensormodul, Fig. 2b zeigt eine perspektivische Ansicht dieses Speicherund Funk-Moduls, Fig. 3a zeigt eine Draufsicht auf eine erfindungsgemäße Basisstation, und Fig. 3b ist diese Basisstation in perspektivischer Ansicht.

Das erfindungsgemäße System ist zur Erfassung von Messwerten an Fahrzeugen gedacht, um eventuell vorhandene ursächliche Fehlerquellen zu diagnostizieren. Dabei wird besonderer Wert auf die einfache Anwendbarkeit und Robustheit aller Systembestandteile gegenüber äußeren Einflüssen am Fahrzeug, aber auch in der Werkstatt (Flüssigkeiten, Temperatur, mechanische Deformation) gelegt. Das System besteht in der dargestellten Ausführungsform aus einer Basisstation, modularen Messwertaufnehmern, einer externen Triggereinrichtung und einer Parametrierungs- und Auswertesoftware, welche in einer Einheit zum Darstellen und/oder Auswerten der Messdaten des Sensormoduls implementiert ist, vorzugsweise in einem PC oder einem Laptop.

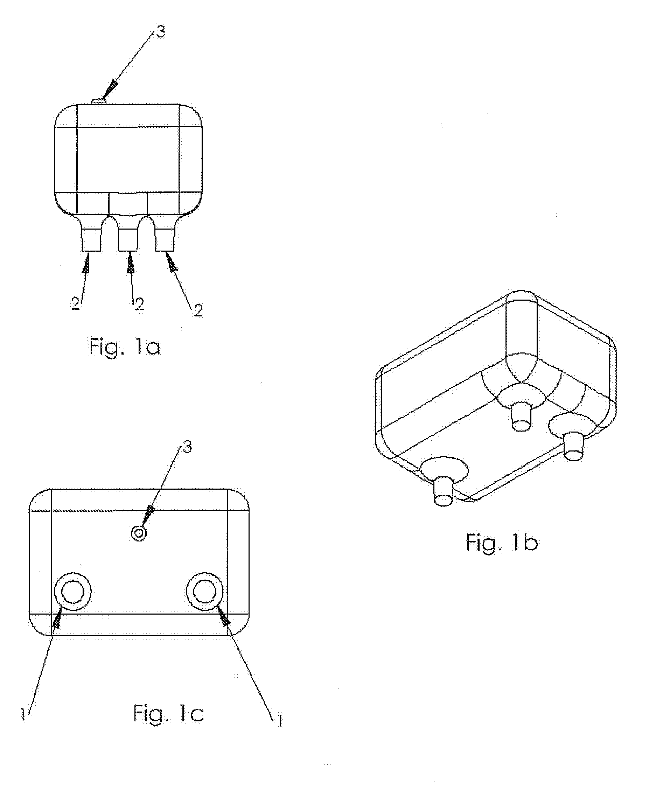

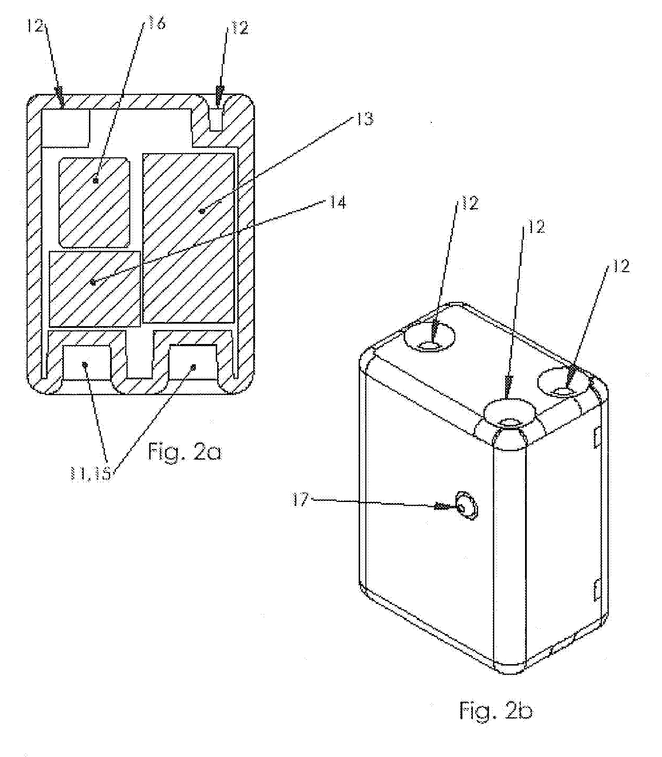

Wie in den Fig. 1a bis 1c und 2a und 2b dargestellt ist, kann ein erfindungsgemäßes kompaktes Sensormodul auch vorteilhafterweise aus zwei trennbaren Teil-Modulen bestehen. Der in den Fig. 1a bis 1c gezeigte Messkopf als erstes Teil-Modul weist zumindest eine Sensoranschlussbuchse 1 für die jeweils interessierende Messgröße, wie etwa einen Druck, eine Temperatur, eine Spannung, eine Stromstärke, etc. auf. Von dieser Sensoranschlussbuchse 1 führen dann allenfalls notwendige Kabel oder Schläuche zur relevanten Meßgröße am Fahrzeug. Im Messkopf kann ein Sensor, beispielsweise ein Mikrophon oder ein Temperaturfühler, allenfalls auch direkt integriert sein, wobei dann keinerlei Verkabelung oder Schlauchleitungen mehr notwendig sind. Wenn notwendig kann im Messkopf die erste Messwertaufbereitung und/oder Verstärkung durch eine integrierte Elektronik stattfinden, allenfalls kann auch eine Schutzschaltung vorgesehen sein.

Auf seiner diesen Sensoranschlussbuchsen 1 gegenüberliegenden Seite des Messkopfes sind Kontaktstifte 2 vorgesehen, die der Verbindung mit dem in den Fig. 2a und 2b dargestellten Speicher- und Funk-Teil-Modul dienen. Über einen dieser Kontaktstifte 2 kann ein den Messwert repräsentierendes Signal, meist eine Spannung, allenfalls auch eine Stromstärke oder ein Widerstandswert, abgegriffen werden, während die beiden anderen Kontaktstifte 2 der Spannungsversorgung des Messkopfes und der darin enthaltenen Geräte und/oder Schaltungen dienen.

Ein Lämpchen oder eine LED 3 kann als Statusanzeige vorhanden sein, allenfalls auch ein Lautsprecher oder eine ähnliche Einheit für Ton- oder Sprachsignale.

Das zweite Teilmodul für das Sensormodul weist natürlich den Kontaktstiften 2 in Größe und Anordnung komplementäre Aufnahmen bzw. Buchsen 12 auf. Weiters ist darin eine Schaltung 14 mit einem Analog/Digital-Konverter für das vom Messkopf abgegriffene Signal, dem Datenspeicher und dem Mikrocontroller für die Aufnahme der Messdaten des Messkopfes als auch für die Steuerung und Kontrolle der Messung vorgesehen. Diese während eines bestimmten Zeitraums autark ermittelten Daten werden zu einem meist späteren Zeitpunkt über das ebenfalls vorhandene Funkmodul 13 drahtlos nach außen übertragen. Die Energieversorgung des Sensormoduls kann autark durch den Energiespeicher 16 erfolgen, es können aber alternativ oder zusätzlich auch noch eine Buchse 11 zum Laden des Energiespeichers 16 in einer Basisstation (weiter unten beschrieben) und/oder eine Buchse 15 zum Anschluß des Sensormoduls an das 12V-Bordnetz des Fahrzeuges vorgesehen sein. Auch das Funk- und Speichermodul kann mit einem Lämpchen oder einer LED 17, einem Lautsprecher od. dgl. als Status- und/oder Ladekontrolle versehen sein.

Das Sensormodul kann auch eine Triggereinrichtung zum Starten bzw. Stoppen der Messwerterfassung oder Setzen von Markern in den Messdaten aufweisen, welche vorzugsweise über ein externes manuelles Betätigungselement ansteuerbar ist. Vorteilhafterweise sind dieses Betätigungselement und die Triggereinrichtung mit Einrichtungen zur drahtlosen Datenübertragung ausgestattet sind. Schließlich wäre auch eine mit dem Datenspeicher für die Messwerte verbundene optische Signalausgabeeinrichtung denkbar, über welche relevante Datenwerte direkt ablesbar sind.

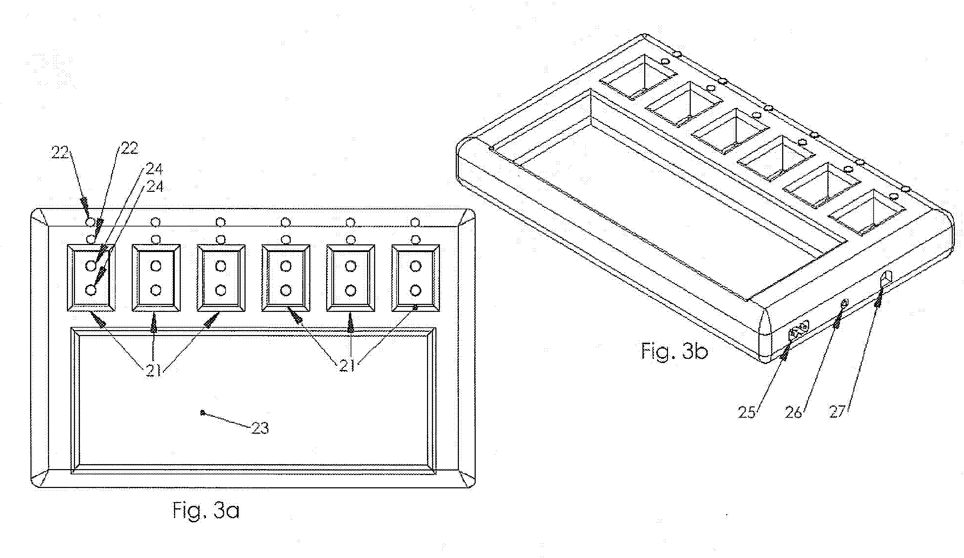

Die in den Fig. 3a und 3b beispielhaft dargestellte Basisstation ist mit Aufnahmen 21 für mehrere, hier sechs, Sensormodule versehen, in welchen Aufnahmen 21 Kontakte 24 vorgesehen sind. Diese Kontakte 24 dienen der Spannungsversorgung der Sensormodule zum Aufladen von deren Energiespeicher 16, können aber auch der Datenübertragung an die und von den Sensormodulen dienen. Selbstverständlich kann die Basisstation auch mit einer Einrichtung zur drahtlosen Datenübertragung und Energieübertragung zum Sensormodul ausgestattet sein. Die Energieversorgung der Basisstation selbst erfolgt vorzugsweise über die Anschlussbuchse 25 für das 230V-Netz und/oder die Buchse 26 für eine Bordnetz-Energieversorgung, beispielsweise aus dem Zigarettenanzünder eines Fahrzeuges. Der Status bzw. Ladezustand der Sensormodule kann über die Kontrolllämpchen bzw. LEDs 22 oder akustische Anzeigeeinrichtungen angezeigt werden.

Selbstverständlich ist auch die kontaktlose Energieeinspeisung sowohl in die Sensormodule als auch in die Basisstation möglich und insbesonders bei automotiven Anwendungen in Werkstätten, Prüfständen, Diagnosezellen, usw. von Vorteil, da Probleme aufgrund der Verschmutzung der Kontakte vermieden werden können.

Eine weitere Buchse 27 ist für die Datenübertragung von und zu einer externen Datenspeicher- und Auswerte-Einheit vorgesehen. Über diese Buchse 27, beispielsweise als USB-Schnittstelle, können auch Daten für die Parametrierung der Sensormodule an diese Module übertragen werden. Diese Datenübertragung zwischen Basisstation und PC, Laptop oder sonstiger Einheit zum Darstellen und/oder Auswerten der Messdaten des Sensormoduls kann aber auch über Einrichtungen zur drahtlosen Datenübertragung erfolgen.

Vorteilhafterweise ist an der Basisstation eine Ablageschale 23 ausgebildet.

Wenn in der Einheit zum Darstellen und/oder Auswerten der Messdaten des Sensormoduls auch eine Parametriersoftware implementiert ist, kann jedes Sensormodul durch die Parametriersoftware nicht nur direkt von dieser Einheit, wenn sie über Kabel oder auch drahtlos mit dem Sensormodul verbunden ist, sondern auch über die Basisstation ansprechbar und parametrierbar sein. In gleicher Art und Weise können auch mehrere Sensormodule direkt oder mittel der Basisstation durch eine Synchronisierungssoftware ansprechbar und miteinander synchronisierbar sein.

Nach dem Parametrieren und allenfalls auch Synchronisieren werden die Sensormodule voneinander unabhängig im Fahrzeug appliziert, welches Fahrzeug dann uneingeschränkt verwendet werden kann, da die applizierten Messmodule für einen definierten Zeitraum im Fahrzeug verbleiben, dort autark arbeiten und die normale Nutzung des Fahrzeuges nicht beeinträchtigen.

Je nach Konfiguration der Messmodule wird die Messwerterfassung kontinuierlich oder getriggert durchgeführt, wobei der Trigger auch vom Benutzer ausgelöst werden kann. Zu einem späteren Zeitpunkt werden dann die Daten der einzelnen Messmodule ausgelesen und zur Visualisierung und Weiterverarbeitung übergeben, wobei in keinem Stadium aber fahrzeugspezifischen Daten (Typdaten) erforderlich sind. Durch das erfindungsgemäße einfache System können sowohl zyklische, konstante oder auch nur sporadische Ereignisse erfasst werden.

## Patentansprüche

1. System zur Erfassung von Messwerten an Fahrzeugen, umfassend zumindest ein kompaktes Sensormodul und eine Einheit zum Darstellen und/oder Auswerten der Messdaten des Sensormoduls, allenfalls mit einer Einrichtung zur drahtlosen Datenübertragung, **dadurch gekennzeichnet, daß** das Sensormodul mit einer Einrichtung (13) zur drahtlosen Datenübertragung, einem Datenspeicher und einem Mikrocontroller (14) ausgestattet ist.

2. System nach Anspruch 1, **dadurch gekennzeichnet, daß** das Sensormodul mit einem integriertem Energiespeicher (16) für autarken Betrieb ausgestattet und zum Aufladen dieses Energiespeichers (16) an eine allenfalls mobile Basisstation ankoppelbar ist.

3. System nach Anspruch 1 oder 2, **dadurch gekennzeichnet, daß** das Sensormodul mit Einrichtungen (11, 15) zur Ankopplung an die Energieversorgung des Fahrzeuges versehen ist.

4. System nach einem der Ansprüche 1 bis 3, **dadurch gekennzeichnet, daß** das Sensormodul aus zwei trennbaren Modulen besteht, wobei eines der Module den Energiespeicher (16) und/oder die Einrichtungen (11, 15) zur Ankopplung an die Energieversorgung des Fahrzeuges, die Einrichtung (13) zur drahtlosen Datenübertragung und den Datenspeicher (14) enthält, und wobei das zweite Modul zumindest einen Sensor und/oder eine Sensoranschlussbuchse (1) für eine Messgröße aufweist, wobei die beiden Module über Kontakte (2, 12) verbindbar sind.

5. System nach einem der Ansprüche 1 bis 4, **dadurch gekennzeichnet, daß** die Basisstation mit der Einheit zum Darstellen und/oder Auswerten der Messdaten des Sensormoduls verbindbar und mit einer Einrichtung zur drahtlosen Datenübertragung zum Sensormodul ausgestattet ist.

6. System nach Anspruch 5, **dadurch gekennzeichnet, daß** die Einheit zum Darstellen und/oder Auswerten der Messdaten des Sensormoduls und die Basisstation über Einrichtungen zur drahtlosen Datenübertragung miteinander verbindbar sind.

7. System nach einem der Ansprüche 1 bis 6, **dadurch gekennzeichnet, daß** in der Einheit zum Darstellen und/oder Auswerten der Messdaten des Sensormoduls eine Parametriersoftware implementiert ist und jedes Sensormodul durch die Parametriersoftware, allenfalls via der Basisstation, ansprechbar und parametrierbar ist.

8. System nach einem der Ansprüche 1 bis 7, **dadurch gekennzeichnet, daß** in der Einheit zum Darstellen und/oder Auswerten der Messdaten des Sensormoduls eine Synchronisierungssoftware für mehrere Sensormodule implementiert ist und alle allenfalls via der Basisstation angeschlossene Sensormodule durch die Synchronisierungssoftware ansprechbar und miteinander synchronisierbar sind.

9. System nach einem der Ansprüche 1 bis 4, **dadurch gekennzeichnet, daß** in der Einheit zum Darstellen und/oder Auswerten der Messdaten des Sensormoduls eine Software zur Weiterverarbeitung der von den Sensormodulen ausgelesenen Messwerte implementiert ist.

10. System nach einem der Ansprüche 1 bis 9, **dadurch gekennzeichnet, daß** das Sensormodul eine Triggereinrichtung zum Starten bzw. Stoppen der Messwerterfassung oder Setzen von Markern in den Messdaten aufweist.

11. System nach Anspruch 10, **dadurch gekennzeichnet, daß** die Triggereinrichtung über ein externes manuelles Betätigungselement ansteuerbar ist.

12. System nach Anspruch 11, **dadurch gekennzeichnet, daß** das manuelle Betätigungselement und die Triggereinrichtung mit Einrichtungen zur drahtlosen Datenübertragung ausgestattet sind.

13. System nach einem der Ansprüche 1 bis 12, **dadurch gekennzeichnet, daß** das Sensormodul eine mit seinem Speicher für die Messwerte verbundene optische und/oder akustische Signalausgabeeinrichtung aufweist.
